# DEMANDE DE BREVET EUROPEEN

(11) **EP 4 549 261 A1**
(43) Date de publication de la demande: **07.05.2025**
(21) Numéro de dépôt: 24206406.1
(22) Date de dépôt: 14.10.2024
(51) Int. Cl.: B60S 1/50

(54) **EQUIPEMENT DE REMPLISSAGE D'UN RÉSERVOIR**

(30) Priorité: 26.10.2023 FR 2311652
(71) Demandeur: AKWEL, 01410 Champfromier (FR)
(72) Inventeur: MEYER, Geoffroy, 26300 Bourg-de-Péage (FR); BONDRAN, Christophe, 26240 Saint Jean de Galaure (FR)
(74) Mandataire: Renard, Alexis

(57) **Abrégé**

L'équipement (10) comprend un réservoir pourvu d'un goulot de remplissage s'étendant selon un axe principal (X) et un organe (30) de remplissage du réservoir par le goulot. En particulier, l'organe (30) est configuré pour être monté en coulissement à l'intérieur du goulot selon ledit axe (X) entre une position proximale d'obturation du goulot et une position distale permettant un remplissage à distance du réservoir. L'organe (30) comprend un corps tubulaire (32) pourvu d'une portion d'extrémité distale fermée (34D) et d'une paroi périphérique pourvue d'une ouverture (40) de remplissage, l'organe (30) étant configuré pour que dans la position proximale la portion distale (34D) forme un bouchon d'obturation du goulot et dans la position distale l'ouverture (40) de remplissage de l'organe (30) soit dégagée hors du goulot pour permettre le remplissage du réservoir.

## Description

La présente invention concerne le domaine technique du remplissage d'un réservoir pour un véhicule automobile. Elle concerne plus particulièrement mais non exclusivement le domaine des réservoirs de fluide de nettoyage de surfaces vitrées d'un véhicule automobile.

De façon connue en soi, un véhicule automobile est équipé d'un système d'essuyage et de lavage des surfaces extérieures de vitre équipant le véhicule, et notamment du pare-brise du véhicule.

Un tel système d'essuyage et de lavage permet d'éviter toute perturbation de la vision de l'environnement par le conducteur notamment lorsque le véhicule roule sous la pluie, que le pare-brise avant est encombré de diverses salissures telles que de la poussière, de la saleté, des insectes ou d'autres corps étrangers susceptibles d'obscurcir la vue du conducteur. Dans certains cas, ce système peut assurer par temps froid également une fonction de dégivrage des surfaces vitrées.

Un tel système peut comporter un ou plusieurs balais d'essuie-glace dont chacun est conçu pour racler au moins une partie de la surface extérieure de la vitre, notamment de manière à évacuer de l'eau présente sur cette surface.

En général, des gicleurs ou des buses de projection sont par exemple disposés sur une partie de carrosserie du véhicule au voisinage de la vitre à essuyer ou peuvent être intégrés aux balais d'essuie-glace et sont alimentés en liquide de lavage dit de lave-glace, par l'intermédiaire d'un circuit comportant notamment une pompe et un système de canalisations reliées à un réservoir de liquide de lave-glace, pour projeter le liquide sur la surface de la vitre.

Quasiment tous les véhicules thermiques sont équipés d'un système d'essuieglace doté d'un réservoir de liquide situé sous le capot, à côté des éléments moteurs ce qui permet d'avoir une ouverture de remplissage orientée vers le haut facilitant ainsi le remplissage du réservoir lorsque ce dernier est vide.

Or, ces dernières années, la lutte contre la pollution atmosphérique a conduit les constructeurs automobiles à développer des véhicules électriques en série comportant un moteur électrique comme unique moyen d'entraînement et dans lesquels une batterie est montée dans le plancher du corps de ces véhicules, libérant ainsi l'espace traditionnellement occupé dans le capot avant par le bloc moteur. L'espace ainsi libéré à l'avant du véhicule électrique est mis à profit pour former un coffre, par exemple pour des bagages.

Afin de répondre à des exigences esthétiques et de qualité perçue par les utilisateurs de véhicules électriques, certains constructeurs ont déporté l'orifice de remplissage du réservoir, traditionnellement accessible par ouverture du capot, dans une partie latérale ou frontale de la carrosserie du véhicule automobile et rendu accessible au moyen d'une trappe, ce qui rend le remplissage du réservoir beaucoup plus difficile.

Il en résulte des constructions complexes de réservoirs, formés par l'assemblage d'un grand nombre de pièces constituant une structure encombrante et multi-composants.

Un but de la présente invention est de proposer un équipement pour véhicule automobile permettant le remplissage d'un réservoir de liquide dont l'orifice de remplissage est accessible à partir d'une partie de carrosserie latérale ou frontale, plus généralement périphérique, qui soit ergonomique, facile d'utilisation et qui permette de limiter les risques de coulures de fluide sur la carrosserie lors de l'opération de remplissage tout en limitant le nombre de composants

### Description de l'invention

L'invention a notamment pour objet un équipement pour véhicule automobile comprenant un réservoir pourvu d'un goulot de remplissage s'étendant selon un axe principal et un organe de remplissage du réservoir par le goulot, caractérisé en ce que l'organe est configuré pour être monté en coulissement à l'intérieur du goulot selon ledit axe entre une position proximale d'obturation du goulot et une position distale permettant un remplissage à distance du réservoir et en ce que l'organe comprend un corps pourvu d'une portion d'extrémité distale fermée et d'une paroi périphérique pourvue d'une ouverture de remplissage, l'organe étant configuré pour que dans la position proximale la portion distale forme un bouchon d'obturation du goulot et dans la position distale l'ouverture de remplissage de l'organe soit dégagée hors du goulot pour permettre le remplissage du réservoir.

Grâce à l'invention, comme l'ouverture est dégagée dans la position distale sur une paroi périphérique du corps de l'organe de remplissage, le remplissage du réservoir par le goulot est facilité et peut être réalisé à distance d'une paroi de carrosserie lorsque le goulot du réservoir débouche sur une paroi latérale ou frontale du véhicule automobile.

Un équipement selon l'invention peut en outre comprendre l'une ou plusieurs des caractéristiques suivantes.

Dans un mode de réalisation préféré, l'axe principal du goulot étant incliné vers le haut par rapport à une direction horizontale, l'organe est configuré, au moins dans sa position distale, pour pouvoir basculer vers le bas par rapport à l'axe principal du goulot.

Dans un mode de réalisation préféré, l'équipement comprend un moyen de verrouillage rapide de l'organe au goulot dans la position proximale.

Dans un mode de réalisation préféré, le moyen de verrouillage comprend un élément mâle et un élément femelle aptes à être engagés l'un dans l'autre, les éléments mâle et femelle étant portés distinctement par des brides externes liées au goulot et à l'organe.

Dans un mode de réalisation préféré, le moyen de verrouillage étant de type liaison à baïonnette, l'organe est pré-assemblé au goulot par insertion de l'élément mâle dans l'élément femelle puis verrouillé au goulot par rotation autour de l'axe principal.

Dans un mode de réalisation préféré, le corps a une forme générale cylindrique tronquée longitudinalement, par exemple de forme semi-cylindrique, présentant une face plane sur laquelle est ménagée l'ouverture de remplissage.

Dans un mode de réalisation préféré, le goulot et l'organe sont pourvus d'un détrompeur pour imposer un positionnement de l'ouverture vers le haut en configuration d'utilisation.

Dans un mode de réalisation préféré, le détrompeur comprend une cloison interne s'étendant en saillie transversale à l'intérieur du goulot et délimitant une section transversale de forme d'insertion complémentaire d'une section transversale de l'organe tubulaire dans une partie d'extrémité proximale.

Dans un mode de réalisation préféré, la paroi interne du goulot comprend encore au moins une nervure longitudinale selon l'axe principal configurée pour empêcher la rotation de l'organe autour de l'axe principal.

Dans un mode de réalisation préféré, la paroi d'extrémité distale comprend une gorge circonférentielle de réception d'un joint torique d'étanchéité.

Dans un mode de réalisation préféré, la paroi d'étanchéité a une forme de bouchon présentant une collerette circonférentielle délimitant des éléments de préhension et manipulation du bouchon.

Dans un mode de réalisation préféré, l'organe est pourvu dans une partie d'extrémité proximale d'une butée apte à coopérer avec un relief interne du réservoir pour empêcher une désolidarisation de l'organe hors du goulot en fin de course de coulissement vers la position distale.

Dans un mode de réalisation préféré, le corps de l'organe est réalisé par un moulage de matière synthétique d'une seule pièce.

L'invention a encore pour objet un véhicule automobile comprenant un équipement selon l'invention, caractérisé en ce que l'équipement de remplissage est accessible depuis une trappe montée sur une structure de carrosserie périphérique, par exemple latérale ou frontale du véhicule automobile de façon que l'on puisse accéder de l'extérieur à cet équipement de remplissage.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue partielle en perspective d'une trappe pour réservoir de liquide lave-glace d'un véhicule automobile comprenant un équipement selon l'invention.
[Fig. 2] La figure 2 est une vue en perspective de l'équipement de la figure 1 dans une position proximale d'obturation.
[Fig. 3] La figure 3 est une vue en coupe de l'équipement de la figure 1 dans une position distale de remplissage.
[Fig. 4] La figure 4 est une vue en perspective d'un organe de remplissage de l'équipement selon l'invention.
[Fig. 5] La figure 5 représente une vue à échelle agrandie d'un goulot de remplissage d'un réservoir de l'équipement selon l'invention.
[Fig. 6] La figure 6 représente une vue à échelle agrandie de moyens de liaison du goulot et de l'organe de remplissage de l'équipement selon l'invention dans une configuration libérée.
[Fig. 7] La figure 7 représente trois vues A, B, C illustrant les différentes configurations des moyens de liaison (vue A : organe de remplissage seul; vue B : déverrouillée, vue C : libérée).
[Fig. 8] La figure 8 représente une vue de face du goulot de la figure 5.
[Fig. 9] La figure 9 représente une vue en perspective de l'organe de remplissage dans une position distale basculée par rapport au goulot.
[Fig. 10] La figure 10 représente trois vues A, B, C illustrant les différentes étapes de fonctionnement de l'équipement selon l'invention.

### Description détaillée de l'invention

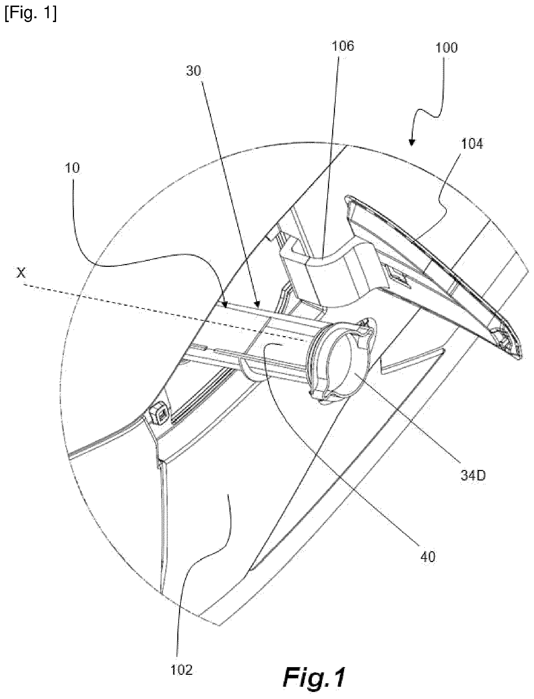

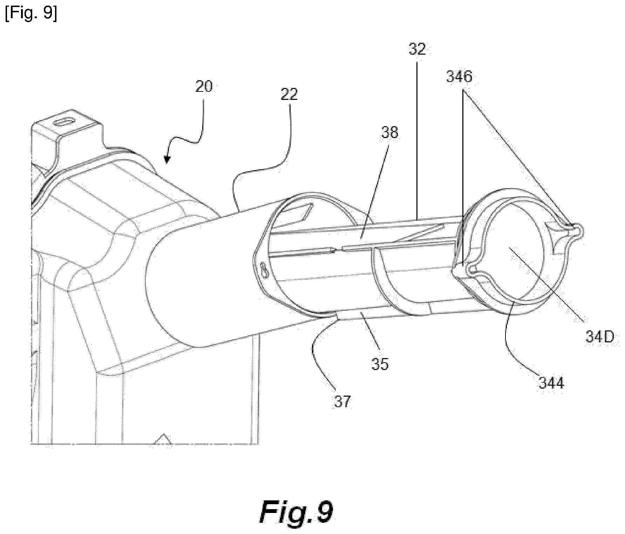

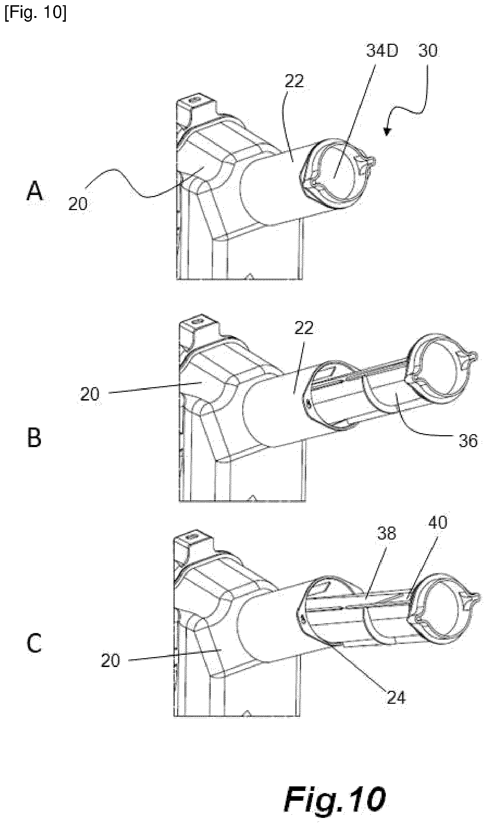

On a représenté sur les figures 1 à 10 un équipement de remplissage d'un réservoir pour véhicule. Dans la suite de la description, l'équipement sera désigné par la référence générale 10.

Comme cela est illustré sur la figure 1, cet équipement 10 est destiné à être monté dans un véhicule automobile 100. De préférence, l'équipement de remplissage 10 est accessible depuis une trappe 104 montée sur une structure de carrosserie périphérique 102, par exemple latérale ou frontale du véhicule automobile 100 de façon que l'on puisse accéder de l'extérieur à cet équipement de remplissage 10.

Le liquide de remplissage peut être par exemple de l'eau ou un liquide anti-gel à base d'alcool destiné à l'alimentation des gicleurs.

Sur la figure 1, on voit que la trappe 104 comprend une charnière 106 de pivotement de la trappe permettant d'accéder à un emplacement à l'intérieur duquel est monté l'équipement de remplissage 10.

Dans la suite de la description, les termes « horizontal », « vertical », « supérieur », « intérieur », « haut », « bas » s'étendent en qualifiant des éléments utilisés dans le cadre d'une utilisation du véhicule automobile sur un sol plat horizontal.

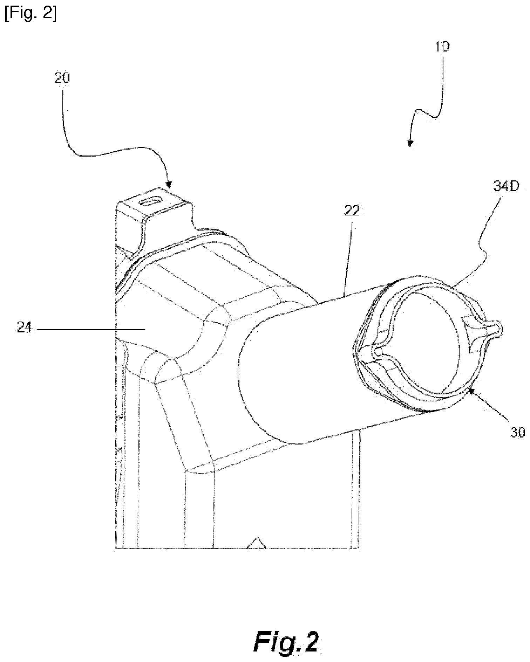

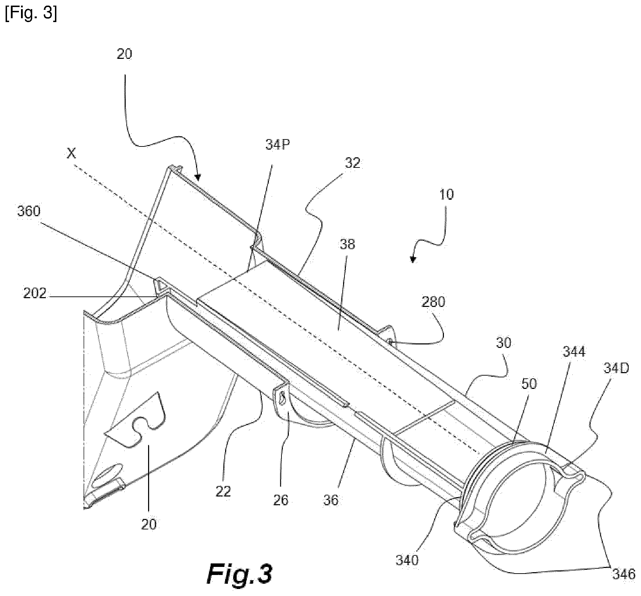

Selon l'invention, l'équipement 10 comprend un réservoir 20 comprend un corps de réservoir et un goulot 22 de remplissage du corps. Ce goulot 22 a par exemple une forme générale tubulaire qui s'étend longitudinalement selon un axe principal X (voir figure 3), de préférence incliné vers le haut dans une configuration montée dans le véhicule automobile 100, comme cela est illustré sur la figure 2. Comme cela est illustré, ce goulot 22 est muni d'une ouverture de remplissage 24. L'inclinaison du goulot 22 est de préférence comprise entre 5 et 45 degrés par rapport au plan horizontal, par exemple entre 25 et 35 degrés.

L'équipement 10 comprend encore un organe de remplissage 30 du réservoir 20 par le goulot 22. Comme illustré sur la figure 3, l'organe 30 est configuré pour être monté en coulissement à l'intérieur du goulot 22 selon ledit axe X entre une position proximale d'obturation (figure 2) du goulot 22 et une position distale (figure 3) permettant un remplissage à distance du réservoir 20.

De préférence, l'organe 30 comprend un corps tubulaire 32 pourvu d'une portion d'extrémité distale fermée 34D et d'une paroi périphérique 36 pourvue d'une ouverture de remplissage 40.

Par exemple, le corps 32 a une forme générale cylindrique tronquée longitudinalement, par exemple de forme semi-cylindrique, présentant une face plane 38 sur laquelle est ménagée l'ouverture de remplissage 40. Bien que non illustré sur les figures, l'organe 30 et le goulot 22 peuvent avoir en variante une forme générale non strictement tubulaire mais peuvent au contraire présenter toute autre forme générale qui permettent une complémentarité de forme autorisant un coulissement relatif selon l'axe X.

De préférence, la paroi distale 34D se présente sous la forme d'un bouchon de section transversale en forme générale de disque plein.

En outre, de préférence, la paroi d'extrémité distale 34D comprend une gorge 340 circonférentielle de réception d'un joint torique d'étanchéité 50. Globalement, la paroi d'extrémité distale 34D peut présenter par exemple une collerette circonférentielle 344 délimitant des éléments 346 de préhension et manipulation du bouchon 34 et plus globalement l'organe de remplissage 30. Ces éléments de préhension 346 se présentent par exemple sous la forme d'oreilles diamétralement opposées.

En fonctionnement, l'organe 30 est configuré pour que dans la position proximale la portion distale 34D forme un bouchon d'obturation du goulot 22 et dans la position distale l'ouverture de remplissage 40 de l'organe 30 soit dégagée hors du goulot 22 pour permettre le remplissage du réservoir 20 par cette même ouverture 40.

L'axe principal X du goulot 22 étant incliné vers le haut par rapport à une direction horizontale, l'organe tubulaire 30 est configuré, au moins dans sa position distale, pour pouvoir basculer vers le bas par rapport à l'axe principal X du goulot 22.

L'organe de remplissage 30 comprend en outre une nervure longitudinale 35 en saillie vers le bas, située de préférence selon une ligne médiane de la partie semi-cylindrique 36 du corps 32, qui permet de guider l'organe selon la direction axiale.

Ainsi, lors du coulissement de l'organe 30 dans le goulot 22, la nervure 35 de l'organe 30 définit une ligne d'appui longitudinale contre la paroi interne 220 du goulot 22 selon la direction axiale permettant le guidage axial de l'organe 30 dans le goulot 22. De préférence, la nervure 35 présente sur une extrémité proximale un cran de basculement 37. Le franchissement de l'orifice 24 par le cran 37 de la nervure 35 au cours du coulissement de l'organe 30 selon la direction axiale entraîne l'organe 30 à basculer vers le bas.

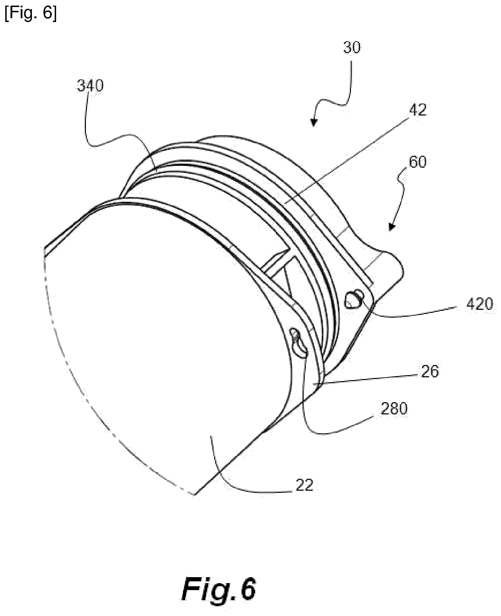

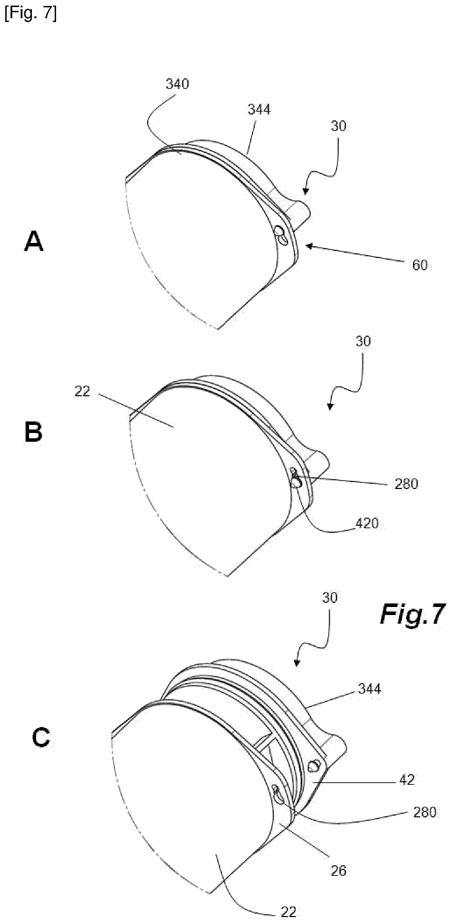

Dans un mode de réalisation préféré illustré sur les figures 6 et 7 comprenant un moyen 60 de verrouillage rapide de l'organe 30 au goulot 22 dans la position proximale.

De préférence, le moyen de verrouillage 60 comprend un élément mâle 420 et un élément femelle 280 aptes à être engagés l'un dans l'autre, les éléments mâle 420 et femelle 280 étant portés respectivement par des brides externes liées à l'organe 30 et au goulot 22. Ce moyen de verrouillage 60 est de préférence libérable pour faciliter le verrouillage et le déverrouillage de l'équipement 10.

Ainsi, la partie distale 34D de l'organe 30 est pourvue d'une bride 42 portant en périphérie au moins un élément mâle 420, par exemple en forme de champignon. En outre, le goulot 22 comprend une bride 26 portant en périphérie un orifice 280 de réception de l'élément 420. Les éléments mâle et femelle sont prévus pour coopérer par clipsage, encliquetage ou tout autre moyen de liaison libérable.

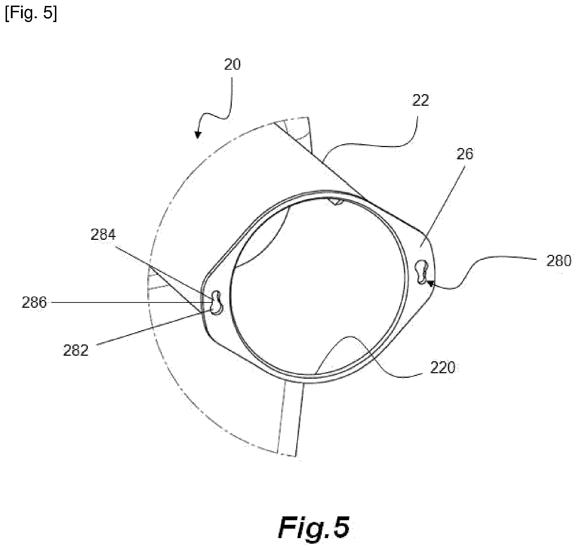

De préférence, le moyen de verrouillage 60 est de type liaison à baïonnette, l'organe 30 est pré-assemblé au goulot 22 par insertion du pion 420 en saillie dans l'orifice 280 puis verrouillé au goulot 22 par rotation autour de l'axe principal X. Par exemple, comme illustré sur la figure 5, l'orifice 280 présente une portion plus large 282 d'insertion du pion 420 et une portion moins large 284 reliées entre elles par un canal 286 de résistance au passage du pion 420 entre les deux portions. Par exemple, le canal 286 comprend une portion étranglée.

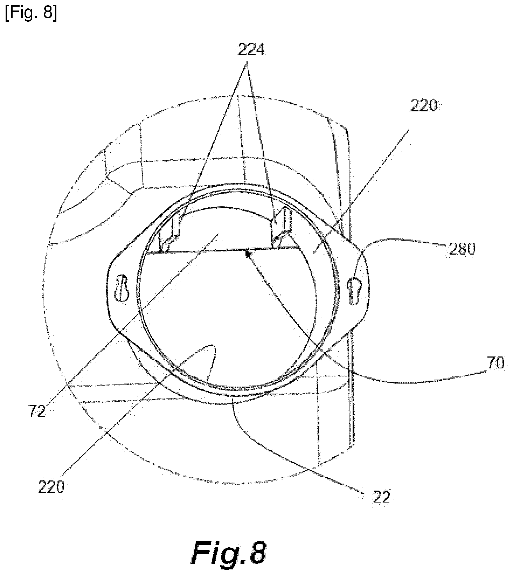

Comme cela est illustré sur la figure 8, le goulot 22 et l'organe 30 sont pourvus d'un détrompeur 70 pour imposer un positionnement de l'ouverture vers le haut en configuration d'utilisation. Par exemple, le détrompeur comprend une cloison interne 72 s'étendant en saillie transversale à l'intérieur du goulot 22 et délimitant une section transversale de forme d'insertion complémentaire d'une section transversale de l'organe tubulaire 30. La cloison 72 a par exemple une forme générale de disque tronqué, par exemple centré sur l'axe X.

La paroi interne 220 du goulot 22 comprend encore au moins une nervure longitudinale 224 selon l'axe principal X configurée pour empêcher la rotation de l'organe 30 autour de l'axe principal X. De préférence, comme illustré sur la figure 8, la paroi interne 220 comprend deux nervures 224 s'étendant à partir de la cloison de détrompeur 72. Ces nervures 224 sont positionnées de part et d'autre d'un axe de symétrie de la cloison de détrompage 72.

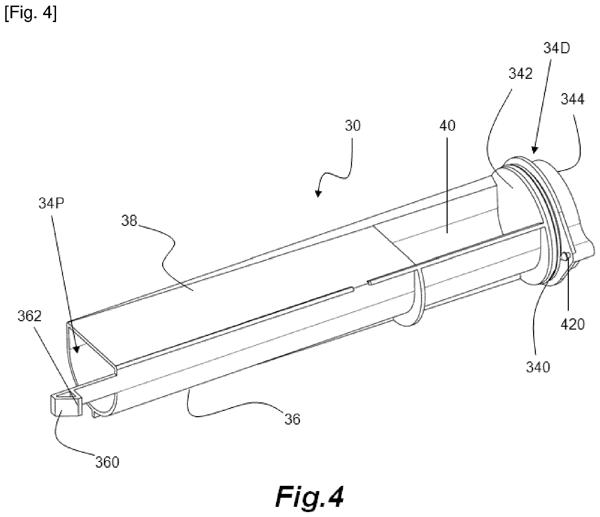

Comme visible sur la figure 4, l'organe tubulaire 30 est pourvu dans une partie d'extrémité proximale 34P d'une butée 360 apte à coopérer avec un relief interne 202 du réservoir 20 pour empêcher une désolidarisation de l'organe hors du goulot 22 en fin de course de coulissement vers la position distale.

Par exemple, le corps 32 de l'organe 30 est réalisé par un moulage de matière synthétique d'une seule pièce.

On va maintenant décrire en référence aux figures 1 à 10 les principaux aspects de fonctionnement d'un équipement selon l'invention.

A l'état initial, l'équipement est dans une configuration fermée. Le bouchon de l'organe de remplissage obture l'organe de remplissage dans sa position proximale. Les moyens de liaison à baïonnette 60 sont dans une configuration verrouillée, le pion 420 étant logé dans la partie la moins large de l'orifice 280.

Pour remplir le réservoir 20, l'utilisateur ouvre la trappe du véhicule automobile qui peut être située sur une paroi latérale ou frontale du véhicule automobile, dans le cas illustré, il s'agit de la paroi frontale.

Puis, l'utilisateur saisit la collerette de préhension de l'organe 30 afin de provoquer un pivotement de l'organe 30 à l'intérieur du goulot 22. Dans l'exemple illustré, l'utilisateur perçoit un effort à surmonter pour provoquer le déplacement du pion 420 à l'intérieur de l'orifice 280 et ainsi déverrouiller les moyens 60.

Une fois l'organe de remplissage 30 déverrouillé du réservoir 20, l'organe est coulissé à l'intérieur du goulot 22 jusqu'à une position distale selon sa nervure longitudinale 35.

Dans cette position distale, grâce au cran de basculement 37, l'organe de remplissage 30 peut être légèrement basculé afin de rapprocher l'inclinaison de l'organe 30 d'un plan horizontal et faciliter ainsi le remplissage par l'ouverture 40. Le basculement permet également d'amener le cran 37 en contact avec la face externe de la bride 26, créant ainsi une retenue et empêchant l'organe 30 de revenir à la position proximale par son propre poids.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Equipement (10) pour véhicule automobile (100) comprenant un réservoir (20) pourvu d'un goulot (22) de remplissage s'étendant selon un axe principal (X) et un organe (30) de remplissage du réservoir (20) par le goulot (22), **caractérisé en ce que** l'organe (30) est configuré pour être monté en coulissement à l'intérieur du goulot (22) selon ledit axe (X) entre une position proximale d'obturation du goulot (22) et une position distale permettant un remplissage à distance du réservoir (20) et **en ce que** l'organe (30) comprend un corps (32) pourvu d'une portion d'extrémité distale fermée (34D) et d'une paroi périphérique (36) pourvue d'une ouverture (40) de remplissage, l'organe (30) étant configuré pour que dans la position proximale la portion d'extrémité distale (34D) forme un bouchon d'obturation du goulot (22) et dans la position distale l'ouverture (40) de remplissage de l'organe (30) soit dégagée hors du goulot (22) pour permettre le remplissage du réservoir (20).

2. Equipement (10) selon la revendication précédente, dans lequel, l'axe principal (X) du goulot (22) étant incliné vers le haut par rapport à une direction horizontale, l'organe (30) est configuré, au moins dans sa position distale, pour pouvoir basculer vers le bas par rapport à l'axe principal (X) du goulot (22).

3. Equipement (10) selon l'une quelconque des revendications précédentes, comprenant un moyen (60) de verrouillage rapide de l'organe (30) au goulot (22) dans la position proximale.

4. Equipement (10) selon la revendication précédente, dans lequel le moyen de verrouillage (60) comprend un élément mâle (420) et un élément femelle (280) aptes à être engagés l'un dans l'autre, les éléments mâle (420) et femelle (280) étant portés distinctement par des brides externes (26, 42) liées au goulot (22) et à l'organe (30).

5. Equipement (10) selon la revendication précédente, dans lequel le moyen de verrouillage (60) étant de type liaison à baïonnette, l'organe (30) est pré-assemblé au goulot (22) par insertion de l'élément mâle (420) dans l'élément femelle (280) puis verrouillé au goulot (22) par rotation autour de l'axe principal (X).

6. Equipement (10) selon l'une quelconque des revendications précédentes, dans lequel le corps (32) a une forme générale cylindrique tronquée longitudinalement, par exemple de forme semi-cylindrique, présentant une face plane (38) sur laquelle est ménagée l'ouverture de remplissage (40).

7. Equipement (10) selon l'une quelconque des revendications, dans lequel le goulot (22) et l'organe (30) sont pourvus d'un détrompeur (70) pour imposer un positionnement de l'ouverture (40) vers le haut en configuration d'utilisation.

8. Equipement (10) selon la revendication précédente, dans lequel le détrompeur (70) comprend une cloison interne (72) s'étendant en saillie transversale à l'intérieur du goulot (22) et délimitant une section transversale de forme d'insertion complémentaire d'une section transversale de l'organe tubulaire (30) dans une partie d'extrémité proximale (34P).

9. Equipement (10) selon la revendication précédente, dans lequel une paroi interne (220) du goulot (22) comprend encore au moins une nervure longitudinale (224) selon l'axe principal (X) configurée pour empêcher la rotation de l'organe (30) autour de l'axe principal (X).

10. Equipement (10) selon l'une quelconque des revendications précédentes, dans lequel la portion d'extrémité distale (34D) comprend une gorge circonférentielle (340) de réception d'un joint torique (50) d'étanchéité.

11. Equipement (10) selon la revendication précédente, dans lequel la portion d'extrémité distale (34D) a une forme de bouchon présentant une collerette circonférentielle (344) délimitant des éléments (346) de préhension et manipulation du bouchon.

12. Equipement (10) selon l'une quelconque des revendications précédentes, dans lequel l'organe (30) est pourvu dans une partie d'extrémité proximale (34P) d'une butée (360) apte à coopérer avec un relief interne (202) du réservoir (20) pour empêcher une désolidarisation de l'organe (30) hors du goulot (22) en fin de course de coulissement vers la position distale.

13. Equipement (10) selon l'une quelconque des revendications précédentes, le corps (32) de l'organe (30) est réalisé par un moulage de matière synthétique d'une seule pièce.

14. Véhicule automobile (100) comprenant un équipement (10) selon l'une quelconque des revendications précédentes, **caractérisé en ce que** l'équipement (10) de remplissage est accessible depuis une trappe (104) montée sur une structure de carrosserie périphérique, par exemple latérale ou frontale du véhicule automobile (100) de façon que l'on puisse accéder de l'extérieur à cet équipement (10) de remplissage.
